# EUROPEAN PATENT APPLICATION

(11) **EP 3 795 637 A1**
(43) Date of publication of application: **24.03.2021**
(21) Application number: 19198929.2
(22) Date of filing: 23.09.2019
(51) Int. Cl.: C08L 71/00

(54) **POLYARYLETHERKETONE POLYMER COMPOSITIONS AND CORRESPONDING ARTICLES**

(71) Applicant: Solvay Specialty Polymers USA, LLC., Alpharetta, GA 30005-3914 (US)
(72) Inventor: HATAYAMA, Toshio, Tokyo, 114-0012 (JP)
(74) Representative: Benvenuti, Federica

(57) **Abstract**

Described herein are polymer compositions (C) including from 40 weight percent ("wt.%") to 85 wt.% of a polyaryletherketone (PAEK); 2 wt.% to 20 wt.% of a liquid crystal polymer (LCP) and/or a polyarylene sulfide (PAS) and a reinforcing filler.

## Description

### Technical Field

The present invention relates to a polymer composition (C) comprising:
- 40 wt.% to 85 wt.% of a polyaryletherketone (PAEK);
- 2 wt.% to 20 wt.% of a liquid crystal polymer (LCP) and/or a polyarylene sulfide (PAS) and
- 10 wt.% to 40 wt.% of a reinforcing filler.

The present invention also relates to thin-walled articles comprising such polymer compositions.

### Background Art

Industry trends require ever smaller light emitting diode (LED) components, which maintain their mechanical performance despite their significantly reduced dimensions. At the same time, the need to be able to process LED components in a high-volume electronics manufacturing setting using surface mounting technology (SMT) is commercially critical to meet consumer demands. Accordingly, there is a need for polymeric materials that can be desirably molded into small LED components, maintain mechanical performance, and have desirable thermal performance to withstand SMT processing.

### Summary of invention

The present invention relates to a polymer composition (C) comprising:
- 40 wt.% to 85 wt.% of a polyaryletherketone (PAEK);
- 2 wt.% to 20 wt.% of a liquid crystal polymer (LCP) and/or a polyarylene sulfide (PAS) and
- 10 wt.% to 40 wt.% of a reinforcing filler.

According to an embodiment, the polymer composition (C) has a melt viscosity of less than 100 Pa·s at a shear rate of 2,500 s-1; less than 80 Pa·s at a shear rate of 5,000 s-1, less than 68 Pa·s at a shear rate of 7,000 s-1; and less than 60 Pa·s at a shear rate of 10,000 s-1.

The present invention also relates to a thin-walled article comprising the polymer composition (C), wherein the thin-walled article comprises a portion that has a thickness of less than 1 mm, preferably less than 0.6 mm, more preferably less than 0.5 mm, more preferably less than 0.4 mm, most preferably less than 0.3 mm.

The present invention also relates to an LED component comprising the thin-walled article.

### Disclosure of the invention

Described herein are polymer compositions (C) including from 40 weight percent ("wt.%") to 85 wt.% of a polyaryletherketone (PAEK); 2 wt.% to 20 wt.% of a liquid crystal polymer (LCP) and/or a polyarylene sulfide (PAS) and a reinforcing filler. It was surprisingly discovered that the addition of a liquid crystal polymer (LCP) or a polyarylenesulfide (PAS) to the polyaryletherketone (PAEK) polymer compositions resulted in polymer compositions having improved melt flow properties (*e*.*g*. reduced melt viscosities and increased bar flow), while simultaneously having maintained or increased mechanical performance (*e.g*. tensile and flexural properties), relative to analogous polymer compositions. Analogous polymer compositions refer to identical polymer compositions except for the fact that any liquid crystal polymer (LCP) and polyarylenesulfide (PAS) are replaced with additional amounts of the polyaryletherketone polymer (*e.g.* as shown in the examples below). As used herein, wt.% is relative to the total weight of the polymer composition (C), unless explicitly noted otherwise.

The polymer compositions (C) also have desirable heat deflection temperatures, suitable for surface mounting technology (SMT) processing. Accordingly, the polymer compositions (C) can be desirably used in the fabrication of thin-walled articles (e.g. LED components), as described in detail below.

In the present application :
- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- Unless specifically limited otherwise, the term "alkyl", as well as derivative terms such as "alkoxy", "acyl" and "alkylthio", as used herein, include within their scope straight chain, branched chain and cyclic moieties. Examples of alkyl groups are methyl, ethyl, 1-methylethyl, propyl, 1,1-dimethylethyl, and cyclo-propyl. Unless specifically stated otherwise, each alkyl and aryl group may be unsubstituted or substituted with one or more substituents selected from but not limited to halogen, hydroxy, sulfo, C₁-C₆ alkoxy,C₁-C₆ alkylthio, C₁-C₆ acyl, formyl, cyano, C₆-C₁₅ aryloxy or C₆-C₁₅ aryl, provided that the substituents are sterically compatible and the rules of chemical bonding and strain energy are satisfied. The term "halogen" or "halo" includes fluorine, chlorine, bromine and iodine, with fluorine being preferred.
- The term "aryl" refers to a phenyl, indanyl or naphthyl group. The aryl group may comprise one or more alkyl groups, and are called sometimes in this case "alkylaryl"; for example may be composed of an aromatic group and two C₁-C₆ groups (e.g. methyl or ethyl). The aryl group may also comprise one or more heteroatoms, e.g. N, O or S, and are called sometimes in this case "heteroaryl" group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, C₁-C₆ alkoxy, sulfo, C₁-C₆ alkylthio, C₁-C₆ acyl, formyl, cyano, C₆-C₁₅ aryloxy or C₆-C₁₅ aryl, provided that the substituents are sterically compatible and the rules of chemical bonding and strain energy are satisfied.

### The Polyaryletherketone (PAEK)

For the purpose of the invention, the term "polyaryletherketone (PAEK)" is intended to denote any polymer, comprising recurring units, more than 50 mole percent (mol.%) of recurring units (R_{PAEK}). Recurring units (R_{PAEK}) comprise a Ar-C(O)-Ar' group, where Ar and Ar', equal to or different from each other, are aromatic groups. In some embodiments, the polyaryletherketone (PAEK) polymer comprises at least 60 mol.%, at least 70 mol.%, at least 80 mol.%, at least 90 mol.%, at least 95 mol.%, or at least 99 mol.%, at least 99.5 mol% or at least 99.9 mol% of recurring units (R_{PAEK}). As used herein, mol.% is relative to the total number of moles of recurring units in the designated polymer (*e.g.* in the polyaryletherketone (PAEK)), unless explicitly noted otherwise.

In some embodiments, recurring units (R_{PAEK}) are selected from the group consisting of formulae (J-A) to (J-O), herein below: 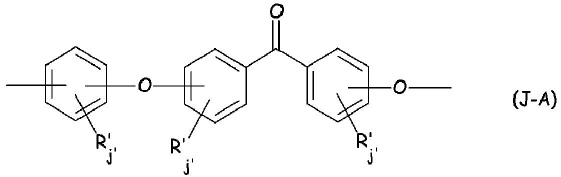 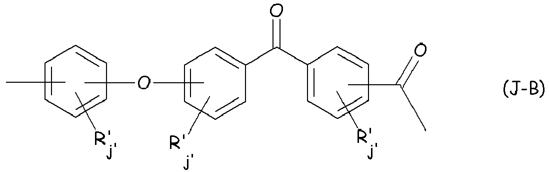 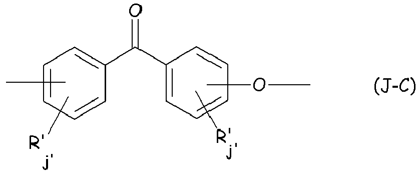 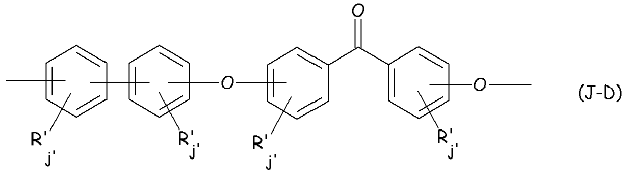 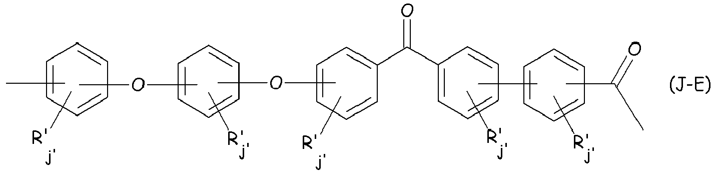 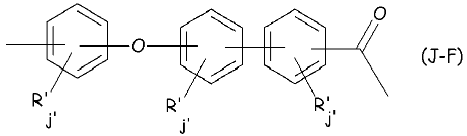 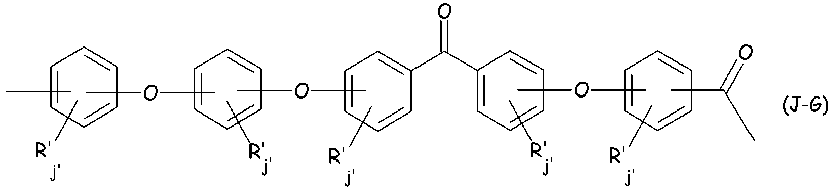 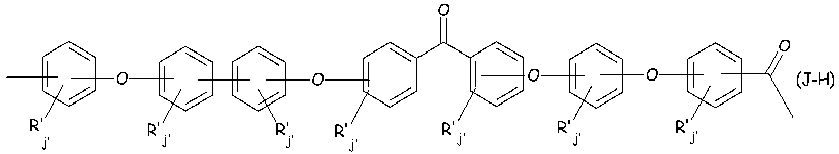 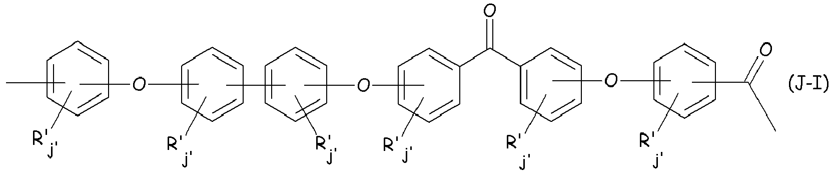 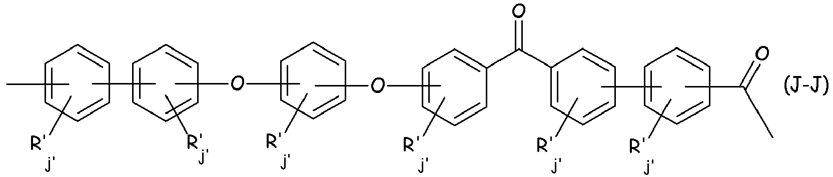 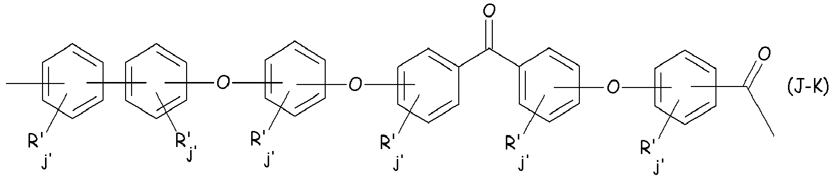 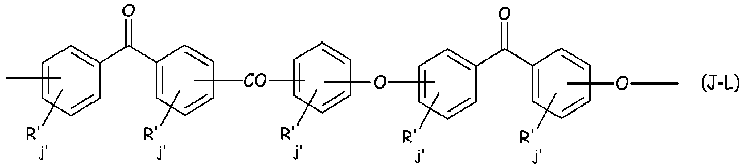 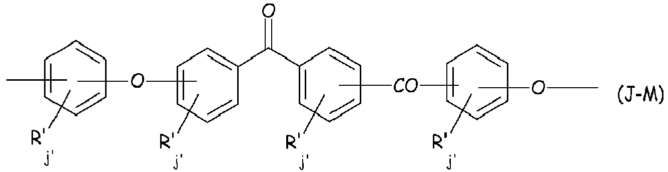 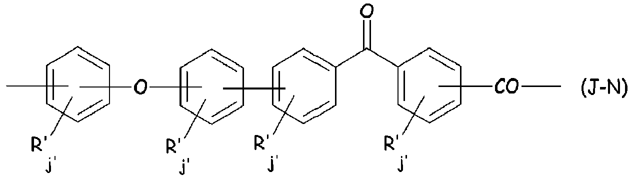 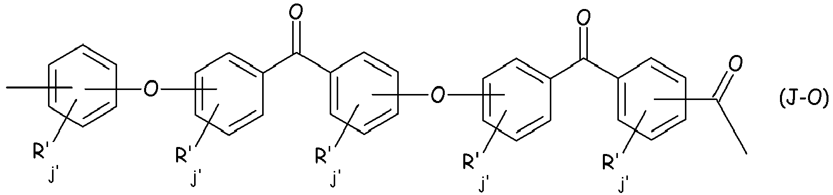 wherein:
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' is an integer from 0 to 4.

In recurring unit (R_{PAEK}), the respective phenylene moieties may independently have 1,2-, 1,4- or 1,3 -linkages to the other moieties different from R' in the recurring unit. Preferably, the phenylene moieties have 1,3- or 1,4- linkages, more preferably they have 1,4-linkage.

In some embodiments, j' in recurring unit (R_{PAEK}) is at each occurrence zero. That is to say that the phenylene moieties have no other substituents than those enabling linkage in the main chain of the polymer.

Preferred recurring units (R_{PAEK}) are thus selected from those of formulae (J'-A) to (J'-O) herein below:

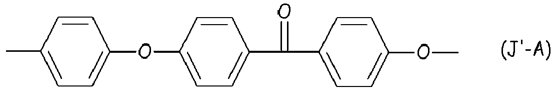

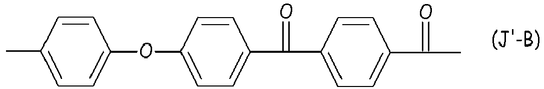

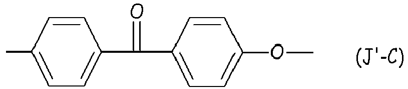

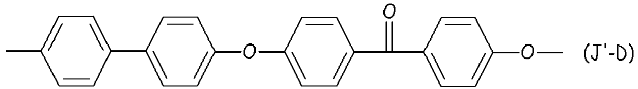

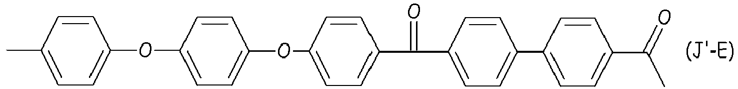

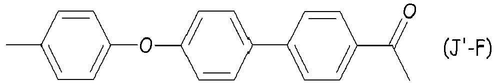

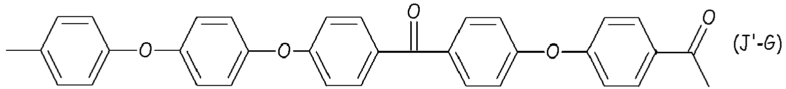

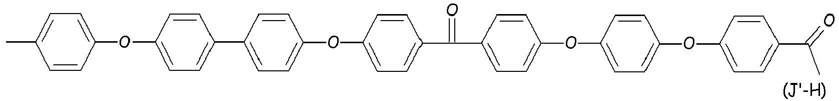

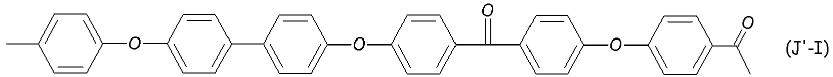

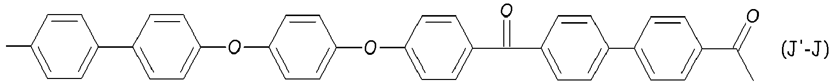

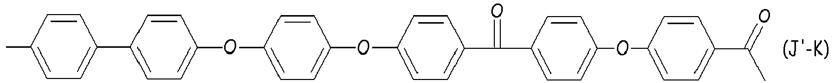

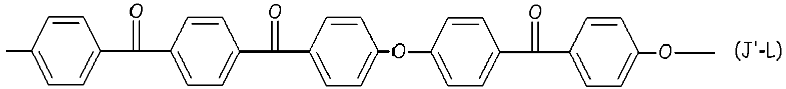

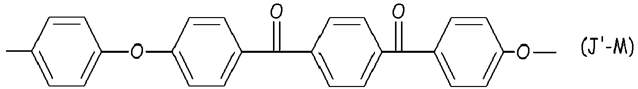

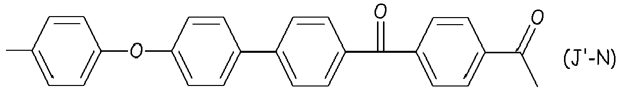

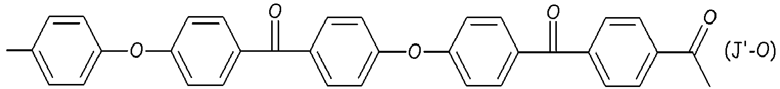

Preferably, the polyaryletherketone (PAEK) is a polyetheretherketone (PEEK). In such and embodiment, the polyetheretherketone (PEEK) has recurring units (R_{PEEK}) represented by either formula (J-A) or (J'-A), preferably recurring unit (R_{PEEK}) is represented by formula (J'-A).

The Liquid Crystal Polymer (LCP)

The term "liquid crystal polymer (LCP)" refers to fully aromatic liquid crystalline polyesters.

Fully aromatic liquid crystalline polyesters generally comprise recurring units derived from
polycondensation of
- an aromatic acid component [monomer (AA)] comprising one or more than one aromatic dicarboxylic acid or derivative thereof, preferably selected from phthalic acids, naphthalene dicarboxylic acids and pyridine dicarboxylic acids, and corresponding substituted counterparts; and
- a dihydroxyl component [monomer (BB)] comprising one or more than one di-hydroxyl aromatic derivative or derivative thereof, preferably selected from biphenol, 4,4'-dihydroxy-1,1-biphenyl, and corresponding substituted counterparts; and/or
from polycondensation of one or more than one aromatic hydroxyl-substituted carboxylic acid or derivatives thereof [monomer (AB)], preferably selected from 4-hydroxybenzoic acid, 6-hydroxy-2-naphthoic acids, and corresponding substituted counterparts,
being understood that monomers (AB) can be polymerized alone or in combinations with monomers (AA) and (BB), as above detailed.

Non limitative examples of commercially available fully aromatic liquid crystalline polyesters are notably VECTRA® LCP from Hoechst-Celanese, known for possessing T_{g} of 145°C or above and XYDAR® LCP from Solvay Specialty Polymers USA, LLC, generally characterized by HDT values exceeding 200 °C, when determined under a 1.8 MPa load according to ASTM D648.

VECTRA® LCP is typically synthesized from 4-hydrobenzoic acid and 6-hydroxy-2-naphtoic acid; VECTRA® LCP is a polymer the recurring units of which are recurring units (Icp-A) and (Icp-B), typically in a ratio (Icp-A)/(Icp-B) of about 25/75 :

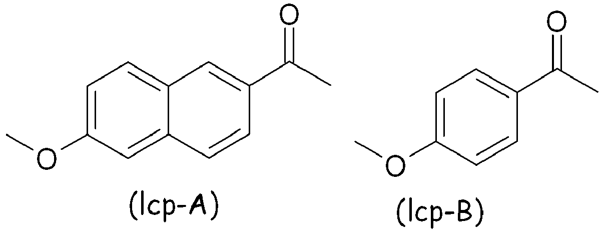

XYDAR® LCP is typically synthesized from 4-hydroxybenzoic acid, 4,4 '-dihydroxy-1,1'-biphenyl, and terephthalic acid; the basic structure can be modified by using other monomers such as isophthalic acid or 4-aminobenzoic acid; XYDAR® LCP is generally a polymer the recurring units of which are recurring units (Icp-C), (Icp-D) and (Icp-B), typically in a ratio [(Icp-C)+(Icp-D)]/(Icp-B) of about 1/2 :

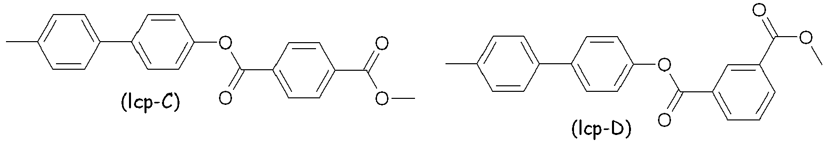

In some embodiments, the total concentration of recurring units (Icp-C), (Icp-D) and (Icp-B) is at least 50 mol.%, at least 60 mol.%, at least 70 mol.%, at least 80 mol.%, at least 90 mol.%, at least 95 mol.%, or at least 99 mol.%.

### The Polyarylene Sulfide (PAS)

Generally, polyarylene sulfide is a polymer comprising -(Ar-S)- recurring units, wherein Ar is an arylene group, also called herein recurring unit (R_{PAS}). The arylene groups of the polyarylene sulfide (PAS) can be substituted or unsubstituted. Additionally, the polyarylene sulfide (PAS) can include any isomeric relationship of the sulfide linkages in polymer; e.g., when the arylene group is a phenylene group, the sulfide linkages can be ortho, meta, para, or combinations thereof.

According to an embodiment, the polyarylene sulfide (PAS) comprises at least 5 mol.%, at least 10 mol.%, at least 20 mol.%, at least 30 mol.%, at least 40 mol.%, at least 50 mol.%, at least 60 mol.%, at least 70 mol.%, at least 80 mol.%, at least 90 mol.%, at least 95 mol.%, at least 99 mol.%, at least 99.5 mol.%, or at least 99.9 mol.% of recurring units (R_{PAS}).

According to an embodiment, the polyarylene sulfide (PAS) polymer is selected from the group consisting of poly(2,4-toluene sulfide), poly(4,4'-biphenylene sulfide), poly(*para*-phenylene sulfide) (PPS), poly(*ortho*-phenylene sulfide), poly(*meta*-phenylene sulfide), poly(xylene sulfide), poly(ethylisopropylphenylene sulfide), poly(tetramethylphenylene sulfide), poly(butylcyclohexylphenylene sulfide), poly(hexyldodecylphenylene sulfide), poly(octadecylphenylene sulfide), poly(phenylphenylene sulfide), poly-(tolylphenylene sulfide), poly(benzylphenylene sulfide) and poly[octyl-4-(3-methylcyclopentyl)phenylene sulfide].

According to an embodiment, the polyarylene sulfide (PAS) is a polyphenylene sulfide (PPS), and comprises recurring units (R_{PPS}) represented by Formula I: 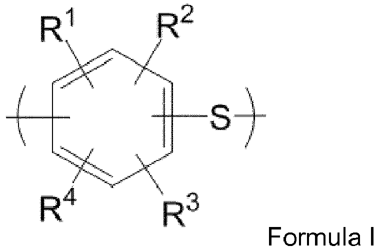 wherein R¹, R², R³, and R⁴ independently can be hydrogen or a substituent, selected from the group consisting of halogen atoms, C₁-C₁₂ alkyl groups, C₇-C₂₄ alkylaryl groups, C₇-C₂₄ aralkyl groups, C₆-C₂₄ arylene groups, C₁-C₁₂ alkoxy groups, and C₆-C₁₈ aryloxy groups.

In its broadest definition, the polyphenylene sulfide (PPS) of the present invention can therefore be made of substituted and/or unsubstituted phenylene sulfide groups.

According to another embodiment, the polyphenylene sulfide (PPS) comprises recurring units (R_{PPS}) represented by Formula II:

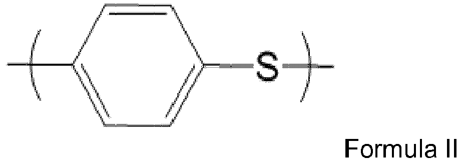

According to an embodiment of the present invention, the polyphenylene sulfide (PPS) comprises at least 50 mol. % of recurring units (R_{PPS}) of Formula I and/or II. For example at least about 60 mol. %, at least about 70 mol. %, at least about 80 mol. %, at least about 90 mol. %, at least about 95 mol. %, at least about 99 mol. % of the recurring units in the polyphenylene sulfide (PPS) are recurring units (R_{PPS}) of Formula I and/or II.

### The polymer composition (C)

The polymer composition (C) comprises the polyaryletherketone (PAEK) and the liquid crystal polymer (LCP) and/or the polyarylene sulfide (PAS), as described above. Additionally, the polymer composition (C) includes a reinforcing filler. In some embodiments, as described in detail below, the polymer composition (C) is free of either the liquid crystal polymer (LCP) or the polyarlene sulfide (PAS).

The concentration of the polyaryletherketone (PAEK) in the polymer composition (C) may be at least 40 wt.%, at least 45 wt.%, at least 50 wt.%, at least 55 wt.%, or at least 60 wt.%. Additionally or alternatively, the concentration of the polyaryletherketone (PAEK) in the polymer composition (C) may be no more than 85 wt.% or no more than 80 wt.%. In some embodiments, the concentration of the polyaryletherketone (PAEK) in the polymer composition (C) is from 40 wt.% to 85 wt.% or from 40 wt.% to 80 wt.%. In some embodiments, the concentration of the polyaryletherketone (PAEK) in the polymer composition (C) is from 45 wt.% to 85 wt.%, from 45 wt.% to 80 wt.%. In some embodiments, polyaryletherketone (PAEK) in the polymer composition (C) is, from 50 wt.% to 85 wt.% or from 50 wt.% to 80 wt.%. In some embodiments, the concentration of the polyaryletherketone (PAEK) in the polymer composition (C) is from 55 wt.% to 85 wt.% or from 55 wt.% to 80 wt.%. In some embodiments, the concentration of the polyaryletherketone (PAEK) in the polymer composition (C) is from 60 wt.% to 85 wt.% or from 60 wt.% to 80 wt.%.

The total concentration of the liquid crystal polymer (LCP) and/or the polyarylene sulfide (PAS) in the polymer composition (C) is at least 2 wt.%, at least 3 wt.%, at least 4 wt.%, or at least 5 wt.%. In some embodiments, the total concentration of the liquid crystal polymer (LCP) and/or the polyarylene sulfide (PAS) in the polymer composition (C) is no more than 20 wt.%, no more than 15 wt.%, or no more than 10 wt.%. In some embodiments, the total concentration of the liquid crystals polymer (LCP) and/or the polyarylene sulfide (PAS) in the polymer composition (C) is from 2 wt.% to 20 wt.%, from 3 wt.% to 20 wt.%, from 4 wt.% to 20 wt.%, from 5 wt.% to 20 wt.%. In some embodiments, the total concentration of the liquid crystals polymer (LCP) and/or the polyarylene sulfide (PAS) in the polymer composition (C) is from 2 wt.% to 15 wt.%, from 3 wt.% to 15 wt.%, from 4 wt.% to 15 wt.%, from 5 wt.% to 15 wt.%. In some embodiments, the total concentration of the liquid crystals polymer (LCP) and/or the polyarylene sulfide (PAS) in the polymer composition (C) is from 2 wt.% to 10 wt.%, from 3 wt.% to 10 wt.%, from 4 wt.% to 10 wt.%, or from 5 wt.% to 10 wt.%.

In some embodiments, the polymer composition (C) can be free of the liquid crystal polymer (LCP) or, in the alternative, the polyarylene sulfide (PAS). That is, the polymer composition (C) has at least one of the liquid crystal polymer (LCP) and the polyarylene sulfide (PAS) and, in some embodiments, can have both. In embodiments in which the polymer composition (C) is free of liquid crystal polymer (LCP), the concentration of the liquid crystal polymer (LCP) in the polymer composition (C) is less than 1.5 wt.%, less than 1.0 wt.%, less than 0.5 wt.%, less than 0.1 wt.%, or less than 0.01 wt.%. Similarly, In embodiments in which the polymer composition (C) is free of polyarylene sulfide (PAS), the concentration of the polyarylene sulfide (PAS) in the polymer composition (C) is less than 1.5 wt.%, less than 1.0 wt.%, less than 0.5 wt.%, less than 0.1 wt.%, or less than 0.01 wt.%. In some embodiments in which the polymer composition (C) is free of the liquid crystal polymer (LCP), the concentration of the polyarylene sulfide (PAS) in the polymer compositions is from 5 wt.% to 15 wt.% or from 5 wt.% to 10 wt.%

Polymer composition (C) further comprises a reinforcing filler. The reinforcing filler can be selected from fibrous and particulate reinforcing fillers. A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50.

The reinforcing filler may be selected from natural, semi-synthetic and synthetic mineral fillers (including, but not limited to, as talc, mica, kaolin, calcium carbonate, calcium silicate, magnesium carbonate, wollastonite), glass fibers, carbon fibers, synthetic polymeric fibers, aramid fibers, aluminum fibers, titanium fibers, magnesium fibers, boron carbide fibers, rock wool fibers, steel fibers and glass wool. Preferably, the reinforcing filler is a mineral filler, most preferably the mineral filler is wollastonite.

Among fibrous fillers, glass fibers are preferred; they include chopped strand A-, E-, C-, D-, S- and R-glass fibers, as described in chapter 5.2.3, p. 43-48 of Additives for Plastics Handbook, 2nd edition, John Murphy. Preferably, the filler is chosen from fibrous fillers. It is more preferably a reinforcing fiber that is able to withstand the high temperature applications.

The concentration of the reinforcing filler may be at least 10 wt.%, or at least 15 wt.%. Additionally or alternatively, the concentration of the reinforcing filler may be no more than 40 wt. % or no more than 30 wt.%. In one embodiment, the concentration of the reinforcing filler is from 10 wt.% to 40 wt.%, from 15 wt.% to 40 wt.%, or from 15 wt.% to 30 wt.%.

The composition (C) of the present invention may also comprise a toughener. A toughener is generally a low glass transition temperature (T_{g}) polymer, with a T_{g} for example below room temperature, below 0° C or even below -25° C. As a result of its low T_{g}, the toughener are typically elastomeric at room temperature. Tougheners can be functionalized polymer backbones.

The polymer backbone of the toughener can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers, ethylene-acrylic acid (EAA), ethylene-vinylacetate (EVA); acrylonitrile-butadiene-styrene rubbers (ABS), block copolymers styrene ethylene butadiene styrene (SEBS); block copolymers styrene butadiene styrene (SBS); core-shell elastomers of methacrylate-butadiene-styrene (MBS) type, or mixture of one or more of the above.

When the toughener is functionalized, the functionalization of the backbone can result from the copolymerization of monomers which include the functionalization or from the grafting of the polymer backbone with a further component.

Specific examples of functionalized tougheners are notably terpolymers of ethylene, acrylic ester and glycidyl methacrylate, copolymers of ethylene and butyl ester acrylate; copolymers of ethylene, butyl ester acrylate and glycidyl methacrylate; ethylene-maleic anhydride copolymers; EPR grafted with maleic anhydride; styrene copolymers grafted with maleic anhydride; SEBS copolymers grafted with maleic anhydride; styrene-acrylonitrile copolymers grafted with maleic anhydride; ABS copolymers grafted with maleic anhydride.

The toughener may be present in the composition (C) in a total amount of greater than 1 wt. %, greater than 2 wt. % or greater than 3 wt. %, based on the total weight of the composition (C). The toughener may be present in the composition (C) in a total amount of less than 30 wt. %, less than 20 wt. %, less than 15 wt. % or less than 10 wt. %, based on the total weight of the polymer composition (C).

The composition (C) may also comprise other conventional additives commonly used in the art, including plasticizers, colorants, pigments (e.g. black pigments such as carbon black and nigrosine), antistatic agents, dyes, lubricants (e.g. linear low density polyethylene, calcium or magnesium stearate or sodium montanate), thermal stabilizers, light stabilizers, flame retardants, nucleating agents and antioxidants.

The composition (C) may also comprise one or more other polymers, preferably polyaryletherketones different from the polyaryletherketone (PAEK) of the present invention.

The polymer composition (C) can have a melt viscosity of less than 100 Pascal seconds (Pa·s), less than 95 Pa·s, less than 90 Pa·s, or less than 85 Pa·s, at a shear rate of 2,500 s⁻¹. The polymer composition (C) can have a melt viscosity less than less than 80 Pa·s, less than 75 Pa·s, less than 70 Pa·s, or less than 65 Pa·s at a shear rate of 5,000 s⁻¹. The polymer composition (C) can have a melt viscosity of less than 68 Pa·s, less than 65 Pa·s, less than 60 Pa·s, or less than 55 Pa·s at a shear rate of 7,000 s⁻¹. The polylmer composition (C) can have a melt viscosity of less than 60 Pa·s, less than 55 Pa·s, less than 50 Pa·s, or less than 45 Pa·s at a shear rate of 10,000 s⁻¹. In some embodiments, the polymer composition (C) has a melt viscosity from 35 Pa·s to 100 Pa·s, from 35 Pa·s to 95 Pa·s, from 35 Pa·s to 90 Pa·s, from 30 Pa·s to 85 Pa·s, at a shear rate of 2,500 s⁻¹. In some embodiments, the polymer composition (C) has a melt viscosity from 32 Pa·s to 80 Pa·s, from 32 Pa·s to 75 Pa·s, from 32 Pa·s to 70 Pa·s, from 32 Pa·s to 65 Pa·s, at a shear rate of 5,000 s⁻¹. In some embodiments, the polymer composition (C) has a melt viscosity from 28 Pa·s to 68 Pa·s, from 28 Pa·s to 65 Pa·s, from 28 Pa·s to 60 Pa·s, from 28 Pa·s to 55 Pa·s, at a shear rate of 7,000 s⁻¹. In some embodiments, the polymer composition (C) has a melt viscosity of from 24 Pa·s to 60 Pa·s, from 24 Pa·s to 55 Pa·s, from 24 Pa·s to 50 Pa·s, from 24 Pa·s to 45 Pa·s, at a shear rate of 10,000 s⁻¹. Melt viscosity can be measured as described in the Examples below.

The polymer composition (C) can have a bar flow (also referred to as bar flow length herein) of at least 26 mm, at least 27 mm, at least 28 mm or at least 29 mm, at a cylinder temperature of 400 ° C, a tool temperature of 200° C and an injection speed of 200 mm/s. Additionally or alternatively, the polymer composition (C) can have a bar flow of no more than 60 mm or no more than 55 mm, no more than 40 mm, or no more than 35 mm at a cylinder temperature of 400 ° C, a tool temperature of 200° C and an injection speed of 200 mm/s. In some embodiments, the polymer composition (C) can have a bar flow of from 26 mm to 60 mm, from 26 mm to 55 mm, from 26 mm to 40 mm, or from 26 mm to 35 mm, at a cylinder temperature of 400° C, a tool temperature of 200° C and an injection speed of 200 mm/s. In some embodiments, the polymer composition (C) can have a bar flow of from 27 mm to 60 mm, from 27 mm to 55 mm, 27 mm to 40 mm, from 27 mm to 35 mm, at a cylinder temperature of 400° C, a tool temperature of 200° C and an injection speed of 200 mm/s. In some embodiments, the polymer composition (C) can have a bar flow of from 28 mm to 60 mm, from 28 mm to 55 mm, from 28 mm to 40 mm, or from 28 mm to 35 mm, at a cylinder temperature of 400° C, a tool temperature of 200° C. In some embodiments, the polymer composition (C) can have a bar flow of from 29 mm to 60 mm, from 29 mm to 55 mm, from 29 mm to 40 mm, or from 29 mm to 35 mm, at a cylinder temperature of 400° C, a tool temperature of 200° C and an injection speed of 200 mm/s. Bar flow can be measured as described in the Examples below.

The polymer composition (C) can have a tensile strength of from 90 MPa to 120 MPa, from 95 MPa to 120 MPa, from 97 MPa to 120 MPa, from 97 MPa to 115 MPa, from 97 MPa to 110 MPa, or from 97 MPa to 105 MPa. The polymer composition (c) can have a tensile modulus of 7,000 MPa to 10,000 MPa, from 7,500 MPa to 10,000 MPa, or from 8,000 MPa to 10,000 MPa, or from 8,000 MPa to 9,000 MPa. The polymer composition (C) can have a flexural strength of from 160 MPa to 250 MPa, from 170 MPa to 250 MPa, from 170 MPa to 230 MPa, from 170 MPa to 220 MPa, from 170 MPa to 215 MPa, from 170 MPa to 210 MPa, or from 170 MPa to 200 MPa. The polymer composition (C) can have a flexural modulus of from 7,000 MPa to 10,000 MPa, from 7,500 MPa to 10,000 MPa, or from 8,000 MPa to 10,000 MPa, or from 8,000 MPa to 9,000 MPa. The polymer composition (C) can have an impact strength of from 3 kilojoules per square meter (kJ/m²) to 6 kJ/m², from 3.5 kJ/m² to 6 kJ/m², from 4 kJ/m² to 6 kJ/m², from 4.3 kJ/m² to 6 kJ/m², or from 4.3 kJ/m² to 5 kJ/m². Tensile strength, tensile modulus, flexural strength, flexural modulus, and impact strength can be measured as described in the Examples below.

### Preparation of the polymer composition (C)

The invention further pertains to a method of making the composition (C) as above detailed, said method comprising melt-blending the polyaryletherketone (PAEK), the liquid crystal polymer (LCP) and/or polyarylene sulfide (PAS), the reinforcing filler, and other specific components, e.g. additional fillers, a toughener, a stabilizer, and of any other optional additives.

Any melt-blending method may be used for mixing polymeric ingredients and non-polymeric ingredients in the context of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing agent presents a long physical shape (for example, a long glass fiber), drawing extrusion molding may be used to prepare a reinforced composition.

### Articles and applications

The present invention also relates to articles comprising the polymer composition (C) of the present invention.

The polymer composition (C) can notably be used in thin-walled articles. Thin-walled articles have at least one portion having a thickness of less than 1 mm, less than 0.6 mm, less than 0.5 mm, less than 0.4 mm or less than 0.3 mm. The thickness can be taken along a line normal to the surface of the thin-walled article and extending through the article. At least because of the improved melt flow properties, the polymer compositions (C) can desirably fill molds having significantly reduced volumes in regions corresponding to the thin-walled portions of articles formed by the mold. Furthermore, because the mechanical performance of the polymer compositions (C) is maintained relative to analogous polymer compositions, and in many cases significantly improved, the resulting thin-walled regions have desirable structural stability, despite having small dimensions. Thin-walled articles include, but are not limited to, housings of electrical devices. Electrical devices include, but are not limited to, sensors, connectors, capacitors, relays and light emitting diode (LED).

In one embodiment, the thin-walled article can be a component of an LED. A light emitting diode device refers to a device comprising at least one LED, and electrical connection capable of connecting the LED to an electrical circuit, and a housing partially surrounding the LED. The LED device may optionally have a lens that fully or partially covers the LED.

In one embodiment, the LED component is an LED housing. The LED housing can optionally include reflectors and reflector plates. In some embodiments, the polymer composition (C) can be overmolded onto a metal (such as copper or silver-coated copper or steel or aluminum) lead frame that can be used to make an electrical connection to an LED inserted into the housing. The LED housing has a cavity in the portion of the housing that surrounds the LED, which serves to reflect the LED light in the outward direction and towards a lens, if one is present. The cavity may be in a cylindrical, conical, parabolic or other curved form, and preferably has a smooth surface. Alternatively, thereof the cavity may be parallel or substantially parallel to the LED. A lens may be formed over the diode cavity and may comprise an epoxy or silicone material.

Still further, because the polymer compositions (C) can have a heat deflection temperature of at least 320° C, they can be desirably incorporated into thin-walled articles that are subject to surface mounting technology (SMT) (*e.g.* LED housings). SMT technology involves pacing electronic components onto a substrate (*e.g.* a printed circuit board). With respect to LED devices, some or all of the LED components (*e.g.* the LED housing) are mounted and soldered to the substrate. Because of the soldering process, the polymeric material in the LED components must be able withstand elevated temperatures and mild pressures. Because the HDT of the polymer compositions (C) can be at least 320° C, they are particularly suitable for LED device components, especially LED housings.

In some embodiments, the LED device component can be incorporated into traffic signals, large area displays (including video displays), video screens, interior and exterior lighting, cellular (a.k.a mobile) telephone display backlights, automotive displays, vehicle brake lights, vehicle head lamps, laptop computer display backlights, pedestrian floor illumination, and flashlights.

The article can be molded from the polymer composition (C) of the present invention, by any process adapted to thermoplastics, e.g. extrusion, injection molding, blow molding, rotomolding or compression molding.

The article can be printed from the polymer composition (C) of the present invention, by a process comprising a step of extrusion of the material, which is for example in the form of a filament, or comprising a step of laser sintering of the material, which is in this case in the form of a powder.

The present invention also relates to a method for manufacturing a three-dimensional (3D) object with an additive manufacturing system, comprising :
- providing a part material comprising the polymer composition (C) of the present invention, and
- printing layers of the three-dimensional object from the part material.

The polymer composition (C) can therefore be in the form of a thread or a filament to be used in a process of 3D printing, e.g. Fused Filament Fabrication, also known as Fused Deposition Modelling (FDM).

The polymer composition (C) can also be in the form of a powder, for example a substantially spherical powder, to be used in a process of 3D printing, e.g. Selective Laser Sintering (SLS).

### Use of the polymer composition (C) and articles

The present invention relates to the use of the above-described polymer composition (C) or articles for manufacturing a mobile electronic device component, as described above.

The present invention also relates to the use of the above-described polymer composition (C) for 3D printing an object.

Should the disclosure of any patents, patent applications, and publications which are incorporated herein by reference conflict with the description of the present application to the extent that it may render a term unclear, the present description shall take precedence.

### Examples

These examples demonstrate the rheological, mechanical and thermal performance of several inventive or comparative polymer compositions.

### Raw Materials

PEEK: KetaSpire® KT-890P (Solvay Specialty Polymers USA, L.L.C.)
LCP: Xydar® SRT-802 (Solvay Specialty Polymers USA, L.L.C.)
PAS: PPS - Ryton® QA321N (Solvay Specialty Polymers USA, L.L.C.)
Reinforcing Filler: Wollastonite - SH-1250 (Kinseimatec Co., Ltd.)

### Polymer Composition Preparation

The polymer resins described above were melt blended with pigment and wollastonite using a ZSK-25 twin screw extruder. Compounded resin was pushed from a die hole and pelletized using conventional equipment. Sample parameters for each of the samples are provided in Table 1 (all values in Table 1 are in wt.%):

**TABLE 1**

| Component | CE1 | E1 | E2 | E3 |
|---|---|---|---|---|
| PEEK | 79.50 | 75.50 | 75.50 | 71.50 |
| LCP | | 4.00 | | |
| PPS | | | 4.00 | 8.00 |
| Wollastonite | 20.00 | 20.00 | 20.00 | 20.00 |
| Pigment | 0.50 | 0.50 | 0.50 | 0.50 |

### Testing

### Rheological Properties (Melt Viscosity and Bar Flow)

Melt viscosity was tested according to ISO 11443 using LCR7000 capillary rheometer, at 400° C and a sheer rate between 100 s⁻¹ to 10,000 s⁻¹.

Bar flow length (also referred to as bar flow herein) was measured using a conventional injection molding machine and a specific tool which had a thin cavity of 0.3 mm thickness with 12.7 mm width, 1.0 mm thickness and 12.7 mm width of gate and a runner of 4 x 6.8 mm size of cross-section and totally 137 mm of length. During the injection molding, the same volume of compound was melted using an injection temperature of 400° C. The melted compound was injected at several injection speeds to the thin cavity set at 180° C to 200° C, as listed in TABLE 3. Ten shots of the thin parts were secured after disposal of another ten shots for stabilization of the length. Average length was calculated as the bar flow length.

Tables 2 and 3 display the results of rheological testing.

**TABLE 2**

| | CE1 | E1 | E2 | E3 |
|---|---|---|---|---|
| Shear Rate (s⁻¹) | Melt Viscosity (Pa·s) | | | |
| 100 | 211.2 | 261.5 | 204.5 | 221.3 |
| 400 | 160.0 | 105.6 | 150.0 | 156.7 |
| 1,000 | 130.4 | 108.9 | 120.3 | 124.7 |
| 2,500 | 102.8 | 83.7 | 94.3 | 97.1 |
| 5,000 | 81.3 | 60.5 | 74.7 | 77.4 |
| 7,000 | 69.4 | 52.1 | 65.1 | 67.1 |
| 10,000 | 61.4 | 44.3 | 56.9 | 59.3 |

Referring to Table 2, the samples including a blend of PEEK and either LCP or PPS surprisingly had reduced melt viscosities over a broad range of shear rates, relative the sample including PEEK, but free of LCP and PPS. For example, comparison of E1 with CE1 over the range of sheer rates from 400 s⁻¹ to 10,000 s⁻¹ demonstrated that the melt viscosity of E1 was from 17% to 34% lower than the melt viscosity for CE1. Similarly, comparison of E2 with CE1 over the range of sheer rates from 400 s⁻¹ to 10,000 s⁻¹ demonstrated that the melt viscosity of sample E2 was from about 6% to 8% lower than the melt viscosity for CE1. Comparison of E3 to CE1 demonstrated similar results, though the reduction in the melt viscosity of C3 was about 2% to 5%, relative to CE1.

**TABLE 3**

| | | CE1 | E1 | E2 | E3 |
|---|---|---|---|---|---|
| tool Temperature (ºC) | Injection Speed (mm/s) | Bar Flow (mm) | | | |
| 200 | 100 | 18.75 | 22.21 | 19.82 | 20.91 |
| 200 | 150 | 22.43 | 26.58 | 23.75 | 24.93 |
| 200 | 200 | 25.14 | 30.07 | 26.52 | 27.76 |
| 180 | 100 | 16.59 | 19.72 | 17.49 | 19.16 |
| 180 | 150 | 20.45 | 23.61 | 21.75 | 23.08 |
| 180 | 200 | 23.38 | 26.69 | 25.11 | 25.92 |

Referring to Table 3, the samples including a blend of PEEK and either LCP or PPS surprisingly had improved bar flow, relative the sample including PEEK, but free of LCP and PPS. For example, comparison of E1 with CE1 demonstrated that the bar flow of E1, over the range of testing conditions, was from 14% to 20% higher, relative to the bar flow of CE1. Similarly, comparison of E2 with CE1 demonstrated that the bar flow of E2, over the range of testing conditions, was from 5% to 7% higher, relative to the bar flow of CE1. Comparison of E3 with CE1 demonstrated similar results, thought bar flow of E3 was from 10% to 16% higher, relative to CE1.

### Mechanical Performance (Tensile Properties, Flexural Properties and Impact Strength)

To demonstrate the mechanical performance of the samples, tensile properties, flexural properties and impact strength were measured.

Tensile performance (tensile strength and modulus) were measured according to ASTM D638 with injection molded type I tensile bar described in ASTM D638, at 0.2"/min of testing speed at 23 degree C of temperature. The tensile bars had been conditioned under 23 degree C with 50 % relative humidity ("RH") for at least 40 hours. Flexural properties were measured according to ASTM D790 with an injection molded specimen having dimension of 127 by 12.7 by 3.2 mm, at 0.10"/min of testing speed at 23 degree C of temperature. The molded specimens had been conditioned under 23 degree C with 50 % RH for at least 40 hours. Impact strength (notched Izod impact strength) was measured according to ISO 180/1A with specimen having dimension of 80 by 10.0 by 4.0 mm cut from ISO bar which were injection molded along ISO 294-1, at 23 degree C of temperature. The specimens had been conditioned under 23 degree C with 50 % RH at least 16 hours.

The results of the mechanical measurements are displayed in Table 4.

**TABLE 4**

| | CE1 | E1 | E2 | E3 |
|---|---|---|---|---|
| Tensile Strength (MPa) | 94 | 99 | 97 | 101 |
| Tensile Modulus (MPa) | 7,583 | 8,824 | 7,583 | 7,859 |
| Flexural Strength (MPa) | 172 | 172 | 178 | 172 |
| Flexural Modulus (MPa) | 7,101 | 8,273 | 7,377 | 7,308 |
| Impact Strength (kJ/m²) | 4.09 | 4.48 | 3.88 | 3.90 |

Referring to Table 4, surprisingly, the samples including a blend of PEEK and either LCP or PPS had the same or improved tensile and flexural performance, relative the sample including PEEK, but free of LCP and PPS. For example, the tensile and flexural properties of E1 were identical to or improved, relative to CE1. Similarly results are seen in comparison of E2 and E3 with CE1. With respect to impact strength, while E1 showed a 10% improvement relative to CE1, E2 and E3 were slightly lower than E1, though still having desirable impact strength.

### Thermal Performance (HDT)

HDT was measured according to ISO 75-2/B by edgewise at 0.45 mega Pascals ("MPa") with specimen having dimension of 80 by 10.0 by 4.0 mm cut from ISO bar which were injection molded along ISO 294-1, at 23 degree C of temperature. The specimens were annealed at 200 degree C for 2 hours. Thereafter the specimens had been conditioned under 23 degree C with 50 % RH at least 16 hours. The HDT of CE1 and E1 to E3 were, respectively, 335° C, 331° C, 330° C, 324° C. The HDT of E1 and E2 were slightly lower (1.2% and 1.5%, respectively) relative to CE1, and the HDT of E3 was about 3.3% lower than that of CE1. Nevertheless, each of E1 to E3 has an HDT of at least 320° C, demonstrating that the compositions are suitable for SMT applications (*e.g.* LED device components), as explained in detail above.

## Claims

1. A polymer composition (C) comprising:
- 40 wt.% to 85 wt.% of a polyaryletherketone (PAEK);
- 2 wt.% to 20 wt.%, preferably 3 wt.% to 15 wt.%, of a liquid crystal polymer (LCP) and/or a polyarylene sulfide (PAS) and
- 10 wt.% to 40 wt.% of a reinforcing filler.

2. The polymer composition (C) of claim 1, wherein the liquid crystal polymer (LCP) comprises:
- recurring units (Icp-A) and (Icp-B) represented by the following formulae: 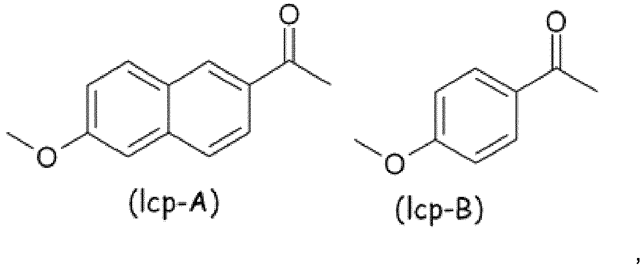 or
- recurring units (Icp-C), (Icp-D) and (Icp-B), where recurring units (Icp-C) and (Icp-D) are represented by the following formulae:

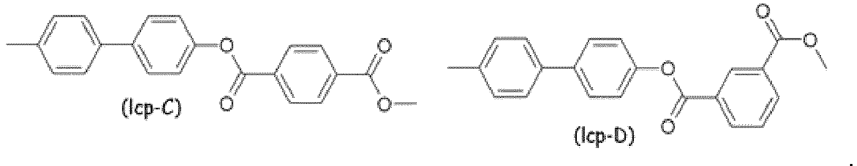

3. The polymer composition (C) of either claim 1 or 2, wherein the polymer composition (C) is free of the polyarylene sulfide (PAS).

4. The polymer composition (C) of claim 1, wherein the polymer composition (C) is free of the liquid crystal polymer (LCP).

5. The polymer composition (C) of any one of claims 1, 2 or 4, wherein the polyarylene sulfide (PAS) is a polyphenylene sulfide (PPS).

6. The polymer composition (C) of claim 4 or 5, wherein the concentration of the polyarylene sulfide (PAS) is from 5 wt.% to 15 wt.%, preferably from 5 wt.% to 10 wt.%.

7. The polymer composition (C) of any one of claims 1 to 6, wherein the polyaryletherketone (PAEK) is a polyetheretherketone (PEEK).

8. The polymer composition (C) of any one of claims 1 to 7 wherein the reinforcing filler is a mineral filler, preferably wollastonite.

9. The polymer composition (C) of any one of claims 1 to 8, wherein the polymer composition (C) has a melt viscosity of less than 100 Pa·s at a shear rate of 2,500 s-1; less than 80 Pa·s at a shear rate of 5,000 s-1, less than 68 Pa·s at a shear rate of 7,000 s-1; and less than 60 Pa·s at a shear rate of 10,000 s-1, as measured according to ISO 11443 at a temperature of 400° C.

10. The polymer composition (C) of any one of claims 1 to 9, wherein the polymer composition (C) has a melt viscosity of less than 85 Pa·s at a shear rate of 2,500 s-1; less than 65 Pa·s at a shear rate of 5,000 s-1, less than 55 Pa·s at a shear rate of 7,000 s-1; and less than 45 Pa·s at a shear rate of 10,000 s-1, as measured according to ISO 11443 at a temperature of 400° C.

11. The polymer composition (C) of any one of claims 1 to 10, wherein the polymer composition (C) has a heat deflection temperature of at least 320° C, preferably at least 330° C.

12. A thin-walled article comprising the polymer composition (C) of any one of claims 1 to 11, wherein the thin-walled article comprises a portion that has a thickness of less than 1 mm, preferably less than 0.6 mm, more preferably less than 0.5 mm, more preferably less than 0.4 mm, most preferably less than 0.3 mm.

13. A sensor housing, a connector housing, a capacitor housing, or a relay housing comprising the thin-walled article of claim 12.

14. An LED component comprising the thin-walled article of claim of claim 12, wherein the LED component is soldered onto a substrate.

15. The LED component of claim 14, wherein the LED component is an LED housing.
